# EUROPÄISCHE PATENTSCHRIFT

(11) **EP 0 606 547 B1**
(45) Veröffentlichungstag und Bekanntmachung des Hinweises auf die Patenterteilung: **27.12.1996**
(21) Anmeldenummer: 93117650.7
(22) Anmeldetag: 30.10.1993
(51) Int. Cl.: B60N 2/16, B60N 2/04

(54) **Arretiervorrichtung für eine Längsverstellvorrichtung eines Fahrzeugsitzes**
Locking arrangement for a longitudinal adjustment device of a vehicle seat
Mécanisme de verrouillage pour le dispositif de déplacement longitudinal d'un siège de véhicule

(30) Priorität: 14.11.1992 DE 4238483; 05.12.1992 DE 4240943
(43) Veröffentlichungstag der Anmeldung: 20.07.1994
(73) Patentinhaber: C. Rob. Hammerstein GmbH, D-42699 Solingen (DE)
(72) Erfinder: Bauer, Heinz, D-42699 Solingen (DE); Becker, Burckhard, D-42655 Solingen (DE); Frohnhaus, Ernst-Reiner, D-42699 Solingen (DE)
(74) Vertreter: Bauer, Wulf, Dr.

(56) Entgegenhaltungen:
- DE-A- 3 506 999
- FR-A- 2 576 256
- GB-A- 1 160 182

## Beschreibung

Die Erfindung bezieht sich auf eine Längsverstellvorrichtung eines Fahrzeugsitzes, nach dem Oberbegriff des Patentanspruchs 1.

Bei der vorbekannten Arretiervorrichtung dieser Art ist der seitlich am Sitzträger angelenkte Betätigungshebel über einen Bowdenzug unmittelbar mit der Sperre verbunden. Dadurch ist es möglich, den Betätigungshebel seitlich am Sitzträger anzuordnen und die Arretierbewegung auf die Sperre zu übertragen, ohne daß diese Übertragung von der Position der Höheneinstellvorrichtung abhängig ist. Die seitliche Anordnung des Betätigungshebels am Sitzträger hat den Vorteil, daß der Betätigungshebel griffgerecht und ergonomisch richtig angeordnet ist, er kann ergriffen werden, ohne die Hand oder den Arm drehen zu müssen. Bei der vorbekannten Konstruktion wird der Betätigungshebel nach oben gezogen, um die Sperre freizugeben, der Betätigungshebel ist federbelastet und geht selbsttätig in seine Ausgangsposition zurück, sobald er freigegeben wird.

Diese vorbekannte Auslegung der Arretiervorrichtung hat sich grundsätzlich bewährt, der Bowdenzug ist aber als nachteilig zu bewerten. Einerseits ist die Montage und Wartung des Bowdenzuges aufwendig, andererseits ist ein Bowdenzug relativ teuer.

Eine Vorrichtung mit ähnlichen Merkmalen aber anderer Konstruktion und Funktion ist aus DE-A-3 506 999 bekannt.

Hier setzt nun die Erfindung ein. Sie hat es sich zur Aufgabe gemacht, die Arretiervorrichtung der eingangs genannten Art dahingehend weiterzubilden, daß unter Beibehaltung der Vorteile ein Bowdenzug entfallen kann und durch eine Übertragungsvorrichtung für die Arretierkraft ersetzt wird, die in der Montage, Wartung und vom Einkaufspreis her kostengünstiger ist, sich für ein Recycling besser eignet und stets in einem vorbestimmten Bereich unterhalb des Sitzträgers bleibt.

Ausgehend von der Arretiervorrichtung der eingangs genannten Art wird diese Aufgabe dadurch gelöst, daß der Betätigungshebel mit einem starren Übertragungsglied gelenkverbunden ist, das wiederum gelenkig mit einem Sperrhebel gelenkverbunden ist, welcher seinerseits an der Sitzschiene angelenkt ist und einen Sperrbereich für die Betätigung der Sperre aufweist.

Erfindungsgemäß wird also der Bowdenzug durch eine Hebelanordnung ersetzt. Sie kann aus demselben Material hergestellt werden wie die Sitzschienen und die sonstigen metallischen Teile des Sitzes, so daß ein Recycling ohne vorherige Demontage möglich ist. Insbesondere läßt sich die erfindungsgemäße Arretiervorrichtung so konstruktiv auslegen, daß die Bewegung ihrer einzelnen Glieder weitgehend den Positionen der Höheneinstellvorrichtung folgt, so daß bei einfachster Ausbildung der Übertragungsvorrichtung eine sichere Funktion und eine klapperfreie Ausbildung möglich sind.

Die erfindungsgemäße Arretiervorrichtung eignet sich für jede Art einer Höheneinstellvorrichtung. Unter Höheneinstellvorrichtung werden im Sinne der Erfindung sowohl Einstellvorrichtungen für die Sitzvorderkante, als auch für die Sitzhinterkante sowie Höheneinstellvorrichtungen für den gesamten Sitz verstanden. Insbesondere eignet sich die Arretiervorrichtung nach der Erfindung für eine sogenannte Parallelogramm-Höheneinstellvorrichtung, bei der der Sitzträger sowohl in seinem vorderen Bereich als auch in seinem hinteren Bereich jeweils über eine linke und eine rechte Schwinge mit der zugehörigen Sitzschiene verbunden ist. Wird in einer Weiterbildung eine Schwinge durch eine gelenkverbundene Anordnung zweier Hebel ersetzt und damit die Parallelogrammkinematik verlassen, läßt sich eine Sitzkante unabhängig von der anderen einstellen.

In vorteilhafter Weiterbildung der Erfindung ist die Gelenkverbindung zwischen Betätigungsarm und Übertragungsglied durch eine Achse in dem einen Teil ausgebildet, das in ein Langloch des anderen Teils eingreift.

Letzteres verläuft vorzugsweise in Längsrichtung des Übertragungsgliedes bzw. des Betätigungsarmes. Auf diese Weise werden Wegunterschiede ausgeglichen, die je nach Auslegung der Höheneinstellvorrichtung zwischen dem Betätigungshebel und der Sperre auftreten können und durch eine spielfrei ausgebildete Gelenkanordnung entsprechend den Merkmalen des Anspruchs 1 nicht vollständig aufgefangen werden können. Durch die Anordnung aus Achse und Langloch ändern sich die Übertragungsverhältnisse zwischen Betätigungshebel und Sperre praktisch nicht, so daß der Betätigungsweg am Betätigungshebel unabhängig von der Position der Höheneinstellvorrichtung praktisch konstant bleibt.

Ein derartiges Langloch ist bei einer reinen Parallelogramm-Höhenverstellvorrichtung im allgemeinen nicht notwendig. Bei dieser werden geringe Wegunterschiede durch eine Mitbewegung des Betätigungshebels ausgeglichen, sofern dies überhaupt notwendig ist. Konstruktiv wird der Betätigungshebel so ausgebildet und ausgelegt, daß sein oberer Gelenkbereich sich auf einem Kreisbogen bewegen kann, der soweit wie möglich mit dem Bogen der Parallelogrammkinematik des Sitzträgers übereinstimmt.

Anstelle eines Langlochs sind auch andere Möglichkeiten eines Ausgleichs der Wegunterschiede möglich. So kann das Übertragungsglied nicht starr, sondern auch zwei einzelnen, in Längsrichtung gegeneinander verschiebbaren, somit gegeneinander längsgeführten Teilen bestehen.

Der Bewegungsbereich der erfindungsgemäßen Arretiervorrichtung und der Bewegungsbereich einer vorderen Schwinge der Höheneinstellvorrichtung sind umso ähnlicher, je näher die Gelenkverbindung zwischen dem Betätigungsarm und dem Übertragungsglied sich in Nähe der Gelenkverbindung zwischen Sitzträger und der vorderen Schwinge befindet, ebenso ist diese Bedingung erfüllt, je näher sich die Gelenkverbindung zwischen Übertragungsglied und Sperrhebel in Nähe der Gelenkverbindung zwischen Bodenschiene und vorderen Schwinge der Höheneinstellvorrichtung befindet. Ebenfalls ist es für die genannte Bedingung vorteilhaft, wenn das Übertragungsglied eine Länge hat, die der Länge der vorderen Schwinge der Höheneinstellvorrichtung entspricht.

Die erfindungsgemäße Ausbildung der Arretiervorrichtung ermöglicht eine Anordnung der Sperre an der optimalen, für die Sperrung günstigsten Position. Konstruktiv besteht damit eine relativ große Freiheit für die Anordnung dieser Sperre, ebenso steht für die Anordnung des Betätigungshebel am Sitzträger ein relativ großer Bereich zur Verfügung.

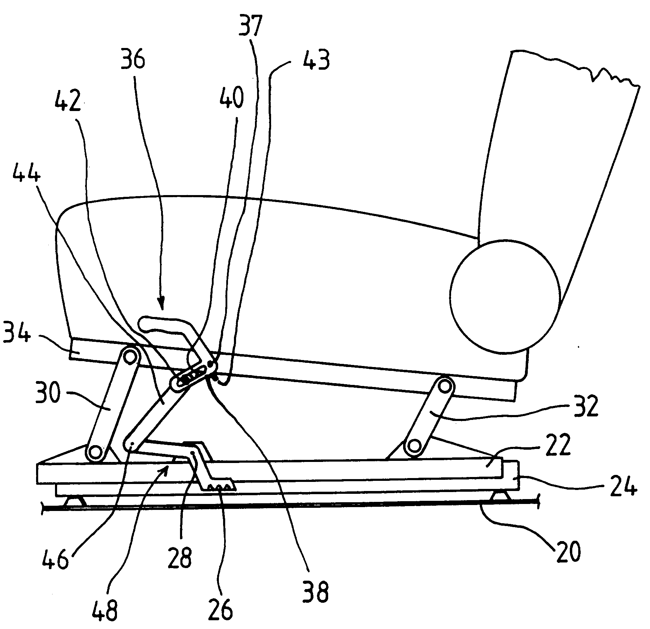

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. Diese zeigt in ihrer einzigen Figur eine schematisierte Seitenansicht eines Fahrzeugsitzes.
Der Fahrzeugsitz gemäß der einzigen Figur ist über eine Längsverstellvorrichtung aus zwei Schienenpaaren mit einer Bodengruppe 20 des zugehörigen Kraftfahrzeugs verbunden. Jedes Schienenpaar besteht aus einer Sitzschiene 22 und einer Bodenschiene 24. Ihre Anordnung und Ausbildung ist ansich bekannt, verwiesen wird auf die Vorveröffentlichungen DE 31 43 431 C2 und DE-OS 25 45 763. Sie sind über eine Sperre, deren konkrete Ausbildung hier nicht wesentlich ist, verwiesen wird auf die Vorveröffentlichungen GB 11 60 182 und DE 27 29 770 C2, die jedoch nur als Beispiel angegeben werden, lösbar arretiert. Dies bedeutet, daß im Normalzustand die beiden Schienen 22, 24 durch die Sperre 26 arretiert sind. In bekannter Weise haben beide Schienenpaare des Fahrzeugsitzes jeweils eine derartige Sperre 26, die beiden Sperren sind über eine querlaufende Achse 28 miteinander synchronisiert. Dadurch ist für beide Sperren 26 nur eine Betätigungsvorrichtung notwendig, auf die im folgenden näher eingegangen wird.

In bekannter Weise hat der Sitz eine Höheneinstellvorrichtung, die hier durch zwei Parallelogramm-Schwingen 30, 32 dargestellt ist. Sie sind einstellbar, zur Vereinfachung der Zeichnung ist die Einstellvorrichtung selbst jedoch nicht dargestellt, sie ist ansich bekannt.

Die beiden Schwingen 30, 32 tragen einen Sitzträger 34, auf dem der eigentliche Sitz mit seiner Lehne angeordnet ist. Am Sitzträger ist auf einer Seite, beispielsweise auf der Türseite, ein Betätigungshebel 36 in einem Schwenkgelenk 37 angelenkt. Er ist zweiarmig, er besteht aus einem nach schräg oben weisenden Handgriff und einem Betätigungsarm 38, beide Arme stehen in einem Winkel von etwa 80° und damit V-förmig zueinander. Am freien Ende des Betätigungsarms 38 ist ein Langloch 40 ausgebildet, es läuft im wesentlichen in Richtung des Betätigungsarms 38. In dieses Langloch greift eine Gelenkachse 42 ein, die Teil eines starren Übertragungsgliedes 44 ist. Letzteres steht in allen Positionen, in die der Sitzträger 34 durch die Höheneinstellvorrichtung gegenüber der Bodenschiene verstellt werden kann, stets in einem Winkel zum Langloch 40, der deutlich größer ist als der Winkel der Selbsthemmung der verwendeten Materialien. Der Winkel beträgt im Ausführungsbeispiel 22° und kann z.B. zwischen 10° und 80° liegen.

In einer anderen, nicht dargestellten Ausführung ist der Betätigungshebel 36 einarmig. Das Übertragungsglied 44 ist zwischen seinem Handgriff und seinem Schwenkgelenk 37 angelenkt.

Vorzugsweise ist dem Betätigungshebel 38 ein Anschlag 43 zugeordnet, an dem er in der Ruheposition (normalerweise die unterste Position) des Handgriffs anliegt, er wird dabei durch eine nicht dargestellte Feder in Anlagerichtung elastisch vorbelastet. Vorzugsweise ist auch ein Anschlag für die Begrenzung der Schwenkbewegung in Betätigungsrichtung (normalerweise nach oben) vorgesehen.

Am anderen Ende des Übertragungsgliedes 44 ist eine Gelenkverbindung 46 zu einem zweiarmigen Sperrhebel 48 vorgesehen, und zwar mit einem Mitnehmerarm 50 dieses Sperrhebels 48. Der andere Arm des Sperrhebels 48 wird als Sperrarm bezeichnet, er trägt das eigentliche Sperrglied der Sperre 26. Wie die Figur zeigt, stehen die beiden Arme des Sperrhebels 48 in einem stumpfen Winkel zueinander. Diese Ausbildung ist jedoch nur ein Beispiel, der Sperrhebel 48 kann auch einarmig sein, im Gegensatz zur Abbildung ist es auch möglich, daß die Sperre 26 nicht hinter der Gelenkverbindung 46, sondern vor dieser angeordnet ist. Weiterhin muß der Sperrhebel 48 nicht die eigentliche Sperre 46 tragen, sondern diese kann separat sein und mit dem Sperrhebel zusammenwirken.

Der Sperrhebel 48 ist an der Sitzschiene 22 um die Achse 28 schwenkbar gelagert. Gemäß Anspruch 1 ist der Sperrhebel 48 an der Sitzschiene 22 angelenkt. Dies wird nun nicht so verstanden, daß der Sperrhebel 48 unmittelbar an der Sitzschiene 22 angelenkt sein muß, er kann dort angelenkt sein, er kann aber auch an einem fest mit der Sitzschiene 22 verbundenen Zusatzteil, beispielsweise einem Lagerwinkel, angelenkt sein.

Die lichte Länge des Lochs 40 wird so bemessen, daß in allen Positionen der Höheneinstellvorrichtung die beschriebene Übertragungsanordnung zwischen dem Betätigungshebel 36 und der Sperre 26 keinen mechanischen Zug überträgt. Anders ausgedrückt soll durch das Langloch 40 im hier gezeigten Ausführungsbeispiel die Abweichung der Kinematik der beschriebenen Hebelanordnung für die Übertragung der Arretierungsbewegung von der Kinematik der Höheneinstellvorrichtung ausgeglichen werden. Die beschriebene Abweichung ist umso geringer, je mehr das Übertragungsglied 44 mit der vorderen Schwinge 34 übereinstimmt und zwar sowohl hinsichtlich der Länge, als auch der Lagerpunkte. Bei einer Parallelogramm-Höheneinstellvorrichtung ist im allgemeinen kein Langloch notwendig. Kleinere Abweichungen werden durch eine geringfügige Nickbewegung des Betätigungshebels 38 ausgeglichen.

Bei einer anderen Ausbildung der Höheneinstellvorrichtung, beispielsweise einer ausschließlichen Einstellvorrichtung für die Sitzvorderkante oder einer Einstellvorrichtung wie dargestellt, jedoch mit einer V-förmigen Anordnung zweier Hebel anstelle der hinteren Schwingen 32, wird die Hebelanordnung für die Übertragung der Arretierkraft entsprechend ausgebildet und das Langloch 40 entsprechend angepaßt.

Bei einer Parallelogramm-Höheneinstellvorrichtung bewegen sich die Sitzträgergelenke beider Schwingen auf einer Kurve. Das Übertragungsglied 44 wird so lang gewählt und die Gelenkverbindung 46 wird örtlich so angeordnet, daß sich bei einer Sitzverstellung das Schwenkgelenk 37 auf einem Bogen bewegt, der möglichst gut dieser Kurve angenähert ist.

## Patentansprüche

1. Arretiervorrichtung an einer Längsverstellvorrichtung eines Fahrzeugsitzes, wobei die Längsverstellvorrichtung zwei Schienenpaare (22, 24) aufweist, die jeweils durch eine Sperre (26) lösbar arretierbar sind und jeweils aus einer Bodenschiene (24) und einer Sitzschiene (22) bestehen, von denen die Sitzschienen (22) über eine Höheneinstellvorrichtung (30, 32) mit einem Sitzträger (34) verbunden sind und am Sitzträger (34) seitlich ein Betätigungshebel (36) der Arretiervorrichtung angelenkt ist, der der Betätigung der Sperre (26) derselben Sitzseite dient, dadurch gekennzeichnet, daß der Betätigungshebel (36) mit einem starren Übertragungsglied (44) gelenkverbunden ist, das wiederum gelenkig mit einem Sperrhebel (48) gelenkverbunden ist, welcher seinerseits an der Sitzschiene (22) angelenkt ist und einen die Sperre (26) aufweisenden oder einer separaten Sperre zugeordneten Sperrbereich hat.

2. Arretiervorrichtung nach Anspruch 1, dadurch gekennzeichnet, daß die Gelenkverbindung zwischen dem Betätigungsarm (38) und dem Übertragungsglied (44) eine Achse (42) aufweist, die in ein Langloch (40) eingreift, wobei vorzugsweise sich das Langloch (40) im wesentlichen in Längsrichtung des Übertragungsglieds (44) oder des Betätigungsarms (38) erstreckt.

3. Arretiervorrichtung nach Anspruch 1 oder 2, dadurch gekennzeichnet, daß sich die Gelenkverbindung zwischen dem Betätigungsarm (38) und dem Übertragungsglied (44) in Nähe der Gelenkverbindung zwischen Sitzträger (34) und einer vorderen Schwinge (30) der Höheneinstellvorrichtung befindet, und daß sich die Gelenkverbindung zwischen Übertragungsglied (44) und Sperrhebel (48) in Nähe der Gelenverbindung zwischen Bodenschiene (24) und einer vorderen Schwinge (30) der Höheneinstellvorrichtung befindet.

4. Arretiervorrichtung nach einem der Ansprüche 1 bis 3, dadurch gekennzeichnet, daß das Übertragungsglied (44) eine Länge hat, die der Länge der vorderen Schwinge (30) der Höheneinstellvorrichtung entspricht, vorzugsweise 50 % bis 110 % der Länge dieser Schwinge (30) hat, und daß der Betätigungshebel (36) einen starr mit ihm verbundenen, V-förmig zu ihm angeordneten Betätigungsarm (38) aufweist, der mit dem Übertragungsglied (44) gelenkverbunden ist.

5. Arretiervorrichtung nach einem der Ansprüche 1 bis 4, dadurch gekennzeichnet, daß die Sperre (26) im wesentlichen etwa in Längsmitte der Schienen (22, 24) angeordnet ist.

6. Arretiervorrichtung nach einem der Ansprüche 1 bis 5, dadurch gekennzeichnet, daß die Gelenkverbindung zwischen dem Betätigungshebel (36) und dem Sitzträger (34) weiter weg von der Vorderkante des Sitzträgers (34) angeordnet ist als die Gelenkverbindung zwischen Betätigungsarm (38) und Übertragungsglied (44).

7. Arretiervorrichtung nach einem der Ansprüche 1 bis 6, dadurch gekennzeichnet, daß der Sperrhebel (48) zweiarmig ist und seine beiden Arme, nämlich Sperrarm und Mitnehmerrarm 50, im Winkel zwischen 90° und 180° zueinander stehen.

8. Arretiervorrichtung nach einem der Ansprüche 1 bis 7, dadurch gekennzeichnet, daß der Anlenkpunkt der vorderen Schwinge (30) der Höheneinstellvorrichtung am Sitzträger (34) näher der vorderen Kante dieses Sitzträgers (34) ist als der Anlenkpunkt des Betätigungshebels (36) am Sitzträger (34).

9. Arretiervorrichtung nach einem der Ansprüche 1 bis 8, dadurch gekennzeichnet, daß das Übertragungsglied (44) aus zwei nur in ihrer Längsrichtung gegeneinander verschiebbaren Teilstücken besteht.

10. Arretiervorrichtung nach einem der Ansprüche 1 bis 9, dadurch gekennzeichnet, daß bei einer Parallelogramm-Höheneinstellvorrichtung der Bewegungskreis des Schwenkgelenks (37) des Übertragungsgliedes um die Gelenkverbindung (46) möglichst weitgehend der Bewegungskurve des Sitzträgers (34) angenähert ist.

## Claims

1. Locking device at a longitudinal-adjustment device of a vehicle seat, wherein the longitudinal-adjustment device includes two pairs of rails (22, 24), each of which being releasably lockable by means of a catch (26), and consisting of a floor rail (24) and a seat rail (22), the seat rails (22) being connected to a seat support (34) through a height-adjustment device (30, 32) and wherein an activation lever (36) of the locking device is laterally hinged to the seat support (34), said activation lever serving to activate the catch (26) of the same side of the vehicle seat, characterised in that the activation lever (36) is hinge-connected to a stiff transmission link (44) which in turn is hinge-connected to a locking lever (48), said locking lever in its turn being hinged to the seat rail and having a locking area which includes the catch (26) or activates a separate catch.

2. Locking device according to Claim 1, characterised in that the hinge connection between the activation arm (38) and the transmission link (44) includes a shaft (42) which is engaged in an elongated hole (40), whereby preferably the elongated hole extends essentially parallel to the lengthwise direction of the transmission link (44) or the activation arm (38).

3. Locking device according to Claim I or 2, characterised in that the hinge connection between the activation arm (38) and the transmission link (44) is located near the hinge connection between the seat support (34) and a front swivel arm (30) of the height-adjustment device, and that the hinge connection between the transmission link (44) and the locking lever (48) is located near the hinge connection between the floor rail (24) and a front swivel arm (30) of the height adjustment device.

4. Locking device according to any of the Claims 1 to 5, characterised in that the transmission link (44) has a length corresponding to the length of the front swivel arm (30) of the height-adjustment device, preferably 50 to 110% of the length of this swivel arm (30), that the activation lever (36) has an activation arm (38) rigidly mounted to it in a shape, the activation arm being hinge-connected to the transmission link (44).

5. Locking device according to any of the Claims 1 to 4, characterised in that the catch (26) is essentially located roughly in the middle of the longitude of the rails (22, 24).

6. Locking device according to any of the Claims 1 to 5, characterised in that the hinge connection between the activation lever (36) and the seat support (34) is located at a greater distance from the front edge of the seat support (34) than is the hinge connection between the activation arm (38) and the transmission link (44).

7. Locking device according to any of the Claims 1 to 7, characterised in that the locking lever (48) has two arms and that its two arms, namely the locking arm and the catching arm 50, standing at an angle that is between 900 and 1800.

8. Locking device according to any of the Claims 1 to 7, characterised in that the hinge point of the front swivel arm (30) of the height-adjustment device on the seat support (34) is closer to the front edge of said seat support (34) than is the hinge point of the activation lever (36) on the seat support (34).

9. Locking device according to any of the Claims 1 to 8, characterised in that the transmission link (44) consists of two separate parts being slidable against each other exclusively in a longitudinal direction.

10. Locking device according to any of the Claims 1 to 9, characterised in that in a parallelogram height adjustment device the arc of motion of the swivel joint (37) of the transmission link (44) around the hinge connection (46) approximates as closely as possible the motion curve of the seat support (34).

## Revendications

1. Dispositif d'arrêt disposé sur un dispositif de réglage longitudinal d'un siège de véhicule, le dispositif de réglage longitudinal présentant deux paires de rails (22, 24) qui peuvent respectivement être arrêtées de manière amovible par le biais d'un arrêt (26) et se composent respectivement d'un rail de fond (24) et d'un rail de siège (22) dont les rails de siège (22) sont reliés, par l'intermédiaire d'un dispositif à régler la hauteur (30, 32), à un support de siège (34), et un levier de manoeuvre (36) du dispositif d'arrêt est articulé latéralement sur le support de siège (34), ce levier servant à manoeuvrer l'arrêt (26) du même côté de siège, caractérisé par le fait que le levier de manoeuvre (36) est relié par le biais d'une articulation à un élément rigide de transmission (44) qui, de son côté, est relié de manière flexible par l'intermédiaire d'une articulation à un levier d'arrêt (48) qui est articulé de sa part sur le rail de siège (22) et a une zone d'arrêt qui présente l'arrêt (26) ou est associée a un arrêt séparé.

2. Dispositif d'arrêt selon la revendication 1, caractérisé par le fait que la jonction articulée entre le bras de manoeuvre (38) et l'élément de transmission (44) présente un arbre (42) qui engrène dans un trou oblong (40), de préférence, le trou oblong (40) s'étendant pour l'essentiel dans le sens longitudinal de l'élément de transmission (44) ou du bras de manoeuvre (38).

3. Dispositif d'arrêt selon la revendication 1 ou 2, caractérisé par le fait que la jonction articulée entre le bras de manoeuvre (38) et l'élément de transmission (44) se trouve à proximité de la jonction articulée entre le support de siège (34) et un bras oscillant (30) avant du dispositif à régler la hauteur, et que la jonction articulée entre l'élémemt de transmission (44) et le levier d'arrêt (48) se trouve à proximité de la jonction articulée entre le rail de fond (24) et un bras oscillant (30) avant du dispositif à régler la hauteur.

4. Dispositif d'arrêt selon l'une des revendications 1 à 3, caractérisé par le fait que l'élémemt de transmission (44) présente une longueur qui correspond à la longueur du bras oscillant (30) avant du dispositif à régler la hauteur, et qui présente de préférence 50% à 110% de la longueur de ce bras oscillant (30), et que le levier de manoeuvre (36) présente un bras de manoeuvre (38) en V qui est relié de manière rigide avec lui et par le biais d'une articulation à l'élément de transmission (44).

5. Dispositif d'arrêt selon l'une des revendications 1 à 4, caractérisé par le fait que l'arrêt (26) est disposé pour l'essentiel à peu prés au milieu de la longueur des rails (22, 24).

6. Dispositif d'arrêt selon l'une des revendications 1 à 5, caractérisé par le fait que la jonction articulée entre le levier de manoeuvre (36) et le support de siège (34) est disposée à une plus grande distance par rapport au bord avant du support de siège (34) que la jonction articulée entre le bras de manoeuvre (38) et l'élément de transmission (44).

7. Dispositif d'arrêt selon l'une des revendications 1 à 6, caractérisé par le fait que le levier d'arrêt (48) présente deux bras et que ses deux bras, à savoir le bras d'arrêt et le bras d'entraînement 50, sont placés l'un par rapport à l'autre à un angle qui est compris entre 90° et 180°.

8. Dispositif d'arrêt selon l'une des revendications 1 à 7, caractérisé par le fait que le point d'articulation du bras oscillant (30) avant du dispositif à régler la hauteur sur le support de siège (34) se trouve plus près du bord avant de ce support de siège (34) que le point d'articulation du levier de manoeuvre (36) sur le support de siège (34).

9. Dispositif d'arrêt selon l'une des revendications 1 à 8, caractérisé par le fait que l'élément de transmission (44) se compose de deux parties séparées qui ne sont déplaçables l'une contre l'autre que dans leur sens longitudinal.

10. Dispositif d'arrêt selon l'une des revendications 1 à 9, caractérisé par le fait que, dans le cas d'un dispositif en parallélogramme à régler la hauteur, le cercle de mouvement du joint de pivotement (37) de l'élément de transmission autour de la jonction articulée (46) est approché dans une mesure aussi large que possible de la courbe de mouvement du support de siège (34).
